# FASCICULE DE BREVET EUROPEEN

(11) **EP 0 992 410 B1**
(45) Date de publication et mention de la délivrance du brevet: **07.06.2006**
(21) Numéro de dépôt: 99402352.1
(22) Date de dépôt: 27.09.1999
(51) Int. Cl.: B60S 1/54, B60S 1/04, B60S 1/56, B60J 10/04

(54) **Procédé et dispositif pour le désembuage ou le dégivrage de vitres latérales coulissantes d'un véhicule automobile**
Verfahren und Vorrichtung zur Entnebelung oder zum Auftauen von verschiebbaren Seitenfensterscheiben in einem Kraftfahrzeug
Method and device for demisting or defrosting lateral sliding windows in a motor vehicle

(30) Priorité: 09.10.1998 FR 9812678
(43) Date de publication de la demande: 12.04.2000
(73) Titulaire: Metzeler Automotive Profile Systems Transieres, 92000 Nanterre (FR)
(72) Inventeur: Reville, Jean-Paul, 95870 Bezons (FR); Hardy, Francis, 76520 Boos (FR)
(74) Mandataire: Jolly, Jean-Pierre

(56) Documents cités:
- EP-A- 0 486 163
- BE-A- 819 473
- DE-A- 4 429 233
- DE-U- 29 606 088
- GB-A- 2 326 084

## Description

La présente invention concerne un dispositif pour le désembuage ou le dégivrage de vitres latérales coulissantes d'un véhicule automobile.

Afin d'assurer et d'améliorer la visibilité externe des habitacles des véhicules, les constructeurs automobiles sont de plus en plus amenés à équiper leurs véhicules de parties vitrées fixes ou coulissantes, notamment sur les panneaux fixes ou mobiles des ouvrants latéraux de la caisse, en particulier des portes d'accès au véhicule. Des joints sont prévus pour assurer l'étanchéité aussi bien climatique que phonique, tant des glaces fixes que des vitres coulissantes.

On connaît déjà le moyen d'assurer l'étanchéité de telles vitres coulissantes de panneaux fixes ou mobiles, par mise en place d'un profilé dit lécheur, muni d'une lèvre souple en contact direct avec la vitre, et d'une partie formant pince ou agrafe et permettant sa fixation sur la feuillure du bandeau de porte.

Le but de ce lécheur est, bien entendu, d'assurer l'étanchéité de la vitre à l'eau et à l'air, mais également d'essuyer la buée ou l'eau sur la vitre lors de son coulissement montant ou descendant dans le panneau de porte, ainsi que d'atténuer les bruits de l'extérieur et d'obturer l'espace existant entre la vitre et le bandeau de porte. Ces types de lécheurs, armés ou non et munis d'une ou plusieurs lèvres ou tubes, sont le plus généralement obtenus par extrusion d'une matière thermoplastique ou élastomère appropriée, puis ensuite floqués ou revêtus d'un agent de glissement.

De tels lécheurs présentent toutefois divers inconvénients :
- que le véhicule soit à l'arrêt ou en marche, il n'est possible de remédier à la condensation ou au givrage des vitres latérales qu'en actionnant ces vitres, au risque de détériorer la lèvre du lécheur ;
- dans une telle situation, les mouvements ascendants et descendants de la vitre, par frottement contre le lécheur, peuvent provoquer des crissements - dénommés "squeek", dans la technique - qu'il est difficile de supprimer.

On connaît déjà, par DE 1 160 320 B et EP 0 225 218, des systèmes de chauffage de pare-brise d'automobiles à partir de joints d'étanchéité, dans lesquels sont encastrés les bords latéraux du pare-brise. De tels systèmes ne sont naturellement pas transposables à des vitre montées coulissantes de bas en haut par rapport à l'encadrement de vitre associé puisque, dans ce cas, les profilés d'étanchéité sont solidaires de la structure du véhicule, mais non de la vitre mobile.

On connaît par ailleurs, par US 4 949 509 A, un système de chauffage de vitres coulissantes d'un véhicule automobile à partir de profilés souples, connectés à un dispositif de chauffage et qui diffusent de l'air chaud en direction de la vitre. Chaque profilé est toutefois rigidement solidaire de la partie inférieure de la vitre associée, se déplace avec elle et assure même l'étanchéité à la base de cette vitre, lorsqu'elle est en position haute de fermeture. Un tel système de chauffage est donc relativement complexe et il nécessite une connexion souple entre le profilé mobile et le dispositif fixe de chauffage.

On connaît enfin par EP-A-0 486 163 un système de vitre coulissante, mobile par rapport à un encadrement de vitre dont une partie saillante au moins est coiffée par une partie à section en U d'un profilé d'étanchéité en un matériau souple, une lèvre de ce profilé pouvant incorporer un élément de chauffage électrique pour dégivrer la vitre ou, alternativement, de l'air chaud pouvant être dirigé vers la vitre dans le même but (voir colonne 7, lignes 37-41).

La présente invention s'intéresse à un tel système de désembuage et de dégivrage des vitres coulissantes d'un véhicule automobile, et elle vise à diriger vers les vitres de l'air chaud en provenance du système de chauffage de l'habitacle du véhicule

A cet effet, l'invention a pour objet un dispositif de désembuage ou de dégivrage d'une vitre latérale d'un véhicule automobile équipé d'un système de chauffage de l'habitacle du véhicule, cette vitre étant montée coulissante de bas en haut et inversement par rapport à une encadrement de vitre, dont une partie saillante au moins est coiffée et pincée par une partie à section en U d'un profilé d'étanchéité en un matériau souple du type dit lécheur de vitre, comportant au moins une lèvre apte à lécher une face d'une vitre coulissante, lors de ses mouvements, cette lèvre étant disposée transversalement au mouvement de la vitre et étant attenante à une partie à section en U, qui coiffe en la pinçant une traverse réunissant les montants latéraux du panneau de la porte d'automobile équipée de cette vitre, ce dispositif étant caractérisé en ce qu'au moins un conduit raccordé au système de chauffage de l'habitacle su véhicule alimente en air chaud le volume séparant la lèvre du lécheur de la partie contiguë de la partie à section en U, ou encore, si le lécheur comporte deux lèvres, le volume séparant les deux lèvres du lécheur.

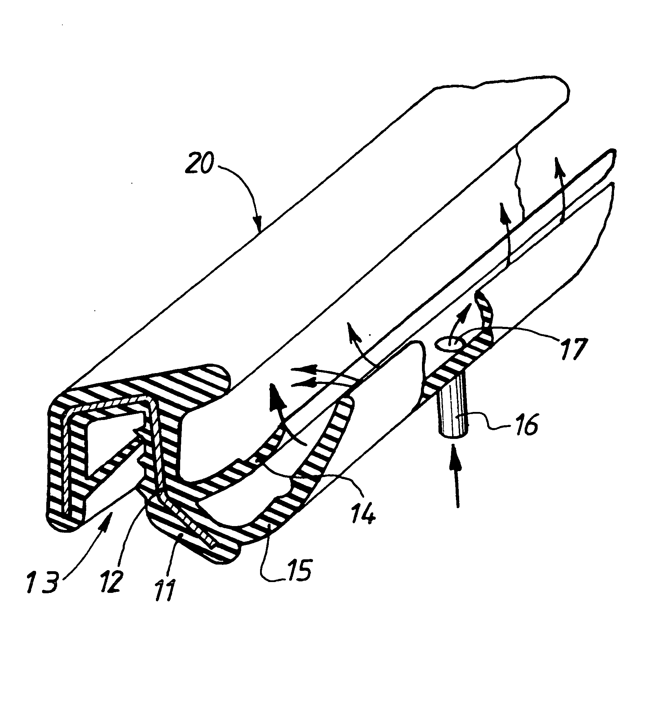

L'invention va être décrite ci-après plus en détail, à titre d'exemple, en référence à la figure unique du dessin annexé, qui représente une vue en perspective d'un lécheur de vitre coulissante à deux lèvres, adapté conformément à la présente invention.

Cette figure représente un lécheur de vitre coulissante à deux lèvres, dans lequel la diffusion d'air chaud s'effectue entre les deux lèvres du lécheur 20, en élastomère ou plastomère 11, dans lequel est noyée une armature métallique 12.

Ce lécheur comprend une partie à section en U 13, destinée à coiffer et pincer une traverse réunissant deux montants latéraux de la porte d'automobile, et deux lèvres 14 et 15, attenantes à une même branche du U et dirigées vers une face de la vitre à laquelle ce lécheur est associé, la partie à section en U et les lèvres 14 et 15 étant parallèles à une même direction.

Conformément à l'invention, un conduit 16 raccordé au système de chauffage de l'habitacle du véhicule débouche en 17, à travers la lèvre 15, entre cette lèvre et la lèvre 14, pour amener de l'air chaud dans l'intervalle qui les sépare, cet air chaud diffusant à partir de cet intervalle le long de la vitre à désembuer, l'espace séparant les lèvres 14 et 15 étant dans ce cas fermé hermétiquement à ses deux extrémités.

Le lécheur pourrait aussi bien ne comporter qu'une seule lèvre et/ou le conduit 16 pourrait également déboucher entre cette unique lèvre ou la lèvre 14 et la partie formant pince 13.

L'invention s'applique aussi bien aux lécheurs intérieurs qu'aux lécheurs extérieurs et, dans ce dernier cas, elle permet d'assurer rapidement et efficacement le dégivrage des vitres latérales du véhicule.

L'invention apporte donc un moyen simple et facile à mettre en oeuvre pour désembuer les vitres latérales mobiles d'un véhicule automobile à partir du système de chauffage de celui-ci.

On notera que le système conforme à l'invention permet de supprimer les aérateurs latéraux du tableau de bord dirigés vers les vitres latérales du véhicule, en libérant ainsi des emplacements sur ce tableau de bord.

## Revendications

1. Dispositif de désembuage ou de dégivrage d'une vitre latérale d'un véhicule automobile équipé d'un système de chauffage de l'habitacle du véhicule, cette vitre étant montée coulissante de bas en haut et inversement par rapport à un encadrement de vitre, dont une partie saillante au moins est coiffée et pincée par une partie à section en U d'un profilé d'étanchéité en un matériau souple du type lécheur de vitre (20), comportant au moins une lèvre (14, 15) apte à lécher une face d'une vitre coulissante, lors de ses mouvements, cette lèvre étant disposée transversalement au mouvement de la vitre et étant attenante à une partie (13) à section en U, qui coiffe en la pinçant une traverse réunissant les montants latéraux du panneau de la porte d'automobile équipée de cette vitre, ce dispositif étant **caractérisé en ce qu'**au moins un conduit (16) raccordé au système de chauffage de l'habitacle du véhicule alimente en air chaud le volume séparant une lèvre du lécheur de la portion contiguë de la partie (13) à section en U ou le volume séparant deux lèvres (14, 15) du lécheur.

## Claims

1. Device for de-misting or de-icing a side window of a motor vehicle fitted with a system of heating the vehicle passenger compartment, this window being mounted slidingly from bottom to top and vice versa relative to a window frame, of which at least one protruding part is capped and pinched by a U-section part of a sealing strip made of a flexible material of the window sealing strip (20) type, comprising at least one lip (14, 15) capable of brushing one face of a sliding window, during its movements, this lip being placed transverse to the movement of the window and adjoining a U-section part (13), which caps while pinching a crossmember uniting the side uprights of the motor vehicle door panel fitted with this window, this device being **characterized in that** at least one duct (16) connected to the vehicle passenger compartment heating system feeds hot air to the volume separating one lip of the sealing strip from the portion touching the U-section part (13) or the volume separating two lips (14, 15) of the sealing strip.

## Patentansprüche

1. Vorrichtung zur Entnebelung oder Enteisung der Seitenscheibe eines Kraftfahrzeugs, welches über eine Fahrgastzellenheizung verfügt, wobei die Seitenscheibe von oben nach unten und umgekehrt verschiebbar gegenüber einem Fensterrahmen eingebaut ist, von dessen Kanten mindestens eine von einem U-förmigen Abschnitt eines Dichtungsprofils aus einem weichen Material in Art einer Wischlippe (20) bedeckt und eingeklemmt ist, umfassend wenigstens eine zum Abwischen einer Fläche einer verschiebbaren Fensterscheibe während ihrer Bewegung tauglichen Lippe (14,15), die quer zur Bewegungsrichtung der Fensterscheibe angeordnet ist und auf ein Teil (13) mit U-förmigem Querschnitt, das eine Querverbindung, welche die seitlichen Stützen der Fahrzeugtürwand verbindet, durch Aufklemmen abdeckt, aufgesetzt ist, wobei diese Vorrichtung **dadurch gekennzeichnet ist, dass** mindestens ein Leitungsrohr, das an das Heizungssystem der Fahrgastzelle des Kraftfahrzeugs angeschlossen ist, den Raum zwischen einer Lippe der Wischlippe und des angrenzenden Abschnittes des Teils mit U-förmigem Querschnitts oder den zwei Lippen der Wischlippe trennenden Raum mit heißer Luft versorgt.
